# EUROPEAN PATENT SPECIFICATION

(11) **EP 0 423 610 B1**
(45) Date of publication and mention of the grant of the patent: **05.01.1994**
(21) Application number: 90119440.7
(22) Date of filing: 10.10.1990
(51) Int. Cl.: C01B 21/14, B01J 38/00, B01J 23/42

(54) **Methods of preserving, storing and using hydroxylamine production catalyst**
Verfahren zum Schützen, Lagern und Verwenden eines Katalysators für die Herstellung von Hydroxylamin
Méthodes de préservation, de conservation et d'utilisation d'un catalyseur de préparation de l'hydroxylamine

(30) Priority: 18.10.1989 US 423318
(43) Date of publication of application: 24.04.1991
(73) Proprietor: BASF Corporation, Parsippany, NJ 07054 (US)
(72) Inventor: Losier, Thomas Philip, Lake Jackson, Texas 77566 (US)
(74) Representative: Mutzbauer, Helmut, Dr.

(56) References cited:
- EP-A- 0 008 479
- EP-A- 0 287 952
- EP-A- 0 334 121
- US-A- 4 115 523

## Description

This invention relates to methods of inhibiting the diminution of the selectivity of a platinum catalyst supported on a carbon carrier in its use for preparing hydroxylamine, which comprise maintaining said catalyst in a substantially oxygen-free environment during preservation, manufacture, storage and use.

The production of hydroxylamine is accomplished utilizing a catalyst consisting of platinum supported on a carbon carrier which is preferably graphite. The catalyst is prepared by precipitating or impregnating platinum onto the support using methods which are well known to those skilled in the art. Such methods are disclosed in U.S. Patent Nos. 4,028,274; 4,122,040, and 3,060,133.

In the operation of a hydroxylamine production facility, the addition of freshly regenerated catalysts to hydroxylamine reaction trains of the production facility results in an increase in catalyst activity. However, such addition of freshly regenerated catalysts also has associated with it a temporary decrease in the selectivity of the reaction towards hydroxylamine. In order to minimize the negative effects of the catalysts' addition on selectivity, and maximize the positive effects on activity, catalysts' addition has heretofore been limited to small amounts of the regenerated catalyst. Rapid addition of regenerated catalysts causes unacceptable selectivities. Further, the selectivity of regenerated catalysts can be adversely affected by post-regeneration handling techniques.

US 4,115,523 describes a process for producing hydroxylamine including reacting excess hydrogen sulfide with nitric oxide in aqueous acidic media at ambient temperature and pressure substantially in the absence of elemental oxygen. But no particular steps for avoiding contact of the catalyst with an oxygenated atmosphere when preparing said catalyst are described.

It has been unexpectedly discovered that the instant invention allows for large amounts of catalysts to be added to hydroxylamine reaction trains without adversely affecting the catalysts selectivity. Further, the instant invention allows for entire reaction trains to be emptied and replaced with regenerated catalysts and such trains have experienced unexpected and surprising increases in hydroxylamine production rates.

This invention pertains to methods of inhibiting the diminution of a selectivity of a platinum catalyst supported on a carbon carrier in its use for preparing hydroxylamine, which comprise maintaining said catalyst in a substantially oxygen-free environment during preservation, manufacture, storage, and use. The substantially oxygen-free environment may take the form of deionized and deoxygenated water, nitrogen, hydrogen, argon, or similar non-oxygen containing media or environment.

Objects, features, and advantages of this invention are to provide methods of preserving, regeneration, storing, and using catalysts supported on a carbon carrier in its use for preparing hydroxylamine without adversely affecting the selectivity of the catalyst; preparing a catalyst supported on a carbon carrier in its use for preparing hydroxylamine to obtain a predetermined selectivity and which increases reaction rates; controlling the reaction selectivity of the catalyst and avoiding large swings in selectivity associated with prior methods of preserving, storing, and using the catalyst; and rapidly charging large amounts of said catalysts to reactor cascades without adversely affecting selectivities and providing an increase in reaction rates.

These and other objects, features, and advantages of this invention will be apparent from the following detailed description and appended claims.

The selectivity of regenerated catalysts can be adversely affected by post-regeneration handling techniques. It has been unexpectedly discovered that exposing freshly generated catalysts to air can cause both the selectivity of the reaction (percent hydroxylamine produced) and the production rate of hydroxylamine to significantly decrease in a relatively short period of time. It is believed that this phenomenon may be irreversible. Regenerated catalyst in production plants is often exposed to air when it is filtered, handled, and transferred to the reactors. Evaluation of these production samples indicates that significant damage can occur to catalyst which is exposed to oxygen prior to its addition to reactor trains.

The original selectivity of the catalyst can be preserved if the catalyst is kept in a substantially oxygen-free environment. It is believed that oxygen reacts readily with catalysts supported on a carbon carrier in its use for preparing hydroxylamine to create a system that favors the synthesis of two undesirable products, ammonium sulfate and nitrous oxide. Regenerated catalysts can be preserved by keeping it in a substantially oxygen-free environment. Suitable substantially oxygen-free environments may take the form of deionized and deoxygenated water, nitrogen, hydrogen, argon, or similar nonoxygen containing media or environment. Preferably, the catalysts may be preserved or stored in a sealed vessel under deionized and deoxygenated water with a nitrogen purge. Nitrogen bubbling with mild agitation of the deionized and deoxygenated water is preferable.

Laboratory experiments were conducted to determine the change in specificity towards hydroxylamine associated with the use of regenerated catalysts which were exposed to oxygen. Several batches of freshly regenerated catalysts were prepared from which samples were taken prior to filtration of the catalyst. The samples were immediately washed, filtered, and split into 50 gram (weight basis) subsamples. The handling of the samples was extremely critical, in that exposure to air was minimized. These "preserved" samples were quickly evaluated in a laboratory reactor. The remaining samples were used in subsequent catalyst handling studies which includes exposure of a sample to various gases which are illustrated in Table I.

Normal filtered samples of the same catalyst batches were also taken. These samples were also immediately split and evaluated in a laboratory reactor.

The results of the laboratory reactor experiments performed on the "preserved" samples and the normal flatbed samples are summarized in Table I. The data indicates that hydroxylamine production is significantly higher for the "preserved" catalyst. Conversely, the ammonium sulfate production is significantly lower for the "preserved" catalyst. Therefore, the specificity of the reaction towards hydroxylamine is favored by the "preserved" catalyst. Although the consumption of free acid is higher for the normal samples which have been exposed to oxygen, it is apparent that the normal catalyst produced more ammonium sulfate and nitrous oxide. The values presented in Table I were calculated on the basis of data obtained during the first two hours of experiments. The two-hour time interval was selected as a benchmark, since the activity of the catalyst is essentially linear during this period. The data indicates that the purging of the "preserved" catalyst samples in deionized and deoxygenated water with either hydrogen or nitrogen is an effective preservation technique.

Preferred catalysts are supported platinum catalysts. Particularly good utility is possessed by platinum on carbon supports, for example active carbon, in particular graphite. Preferably, such a supported catalyst contains from 0.1 to 5% by weight of platinum, in particular from 0.3 to 0.6% by weight, of platinum. It is advantageous to use supported platinum catalysts whose <10 µm particle size fraction is not more than 10% by weight. Preference is given to using a supported platinum catalyst having a particle size from 30 to 90 µm. Catalyst fines can easily be removed by suitable measures, for example sieving.

The supported platinum catalyst has been partially poisoned with sulfur. Advantageously, the sulfur content is from 1 to 50 atom%, in particular from 3 to 30 atom%, based on the platinum metal used. The sulfur can be added to the catalyst in the course of the preparation of the catalyst in the form of suitable compounds, such as alkali metal dithionite, alkali metal sulfide, derivatives of sulfoxylic acid with formaldehyde, sulfurous acid or alkali metal sulfite, which are reduced to sulfur in the course of the reduction. The reducible sulfur compound can also be added to the platinum metal-containing catalyst after the latter has been prepared.

Advantageously, the supported platinum catalyst additionally contains selenium as a poisoning agent. Advantageously, the selenium content is from 0.1 to 10 atom%, in particular from 0.5 to 5 atom%. Selenium can be added to the catalyst in the course of the preparation of the latter or to the ready-prepared catalyst in the form of a suitable compound such as selenium dioxide, selenous acid or selenic acid, which is reduced to selenium in the course of the reduction.

The preparation of such supported catalysts is disclosed in detail in U.S. Patent No. 3,060,133.

A particularly suitable procedure comprises neutralizing a hexachloroplatinate solution to pH 4.6 - 6.0, adding sodium acetate buffer, reducing the 4-valent platinum to platinum II by addition of an equivalent amount of dithionite, and adding further dithionite to effect the poisoning with sulfur. The platinum is precipitated on the support by addition of formic acid.

Such catalysts are used in a process for preparing a hydroxylammonium salt by catalytic reduction of-nitrogen monoxide with hydrogen at elevated temperature in a dilute aqueous solution of a mineral acid in the presence, in suspension, of a supported platinum catalyst which is obtainable by precipitating metallic platinum from an aqueous platinum solution onto a support by means of a reducing agent. e.g. formic acid has been partially poisoned with sulfur.

In general, a molar ratio of hydrogen : nitrogen monoxide of from 1.5:1 to 6:1 is maintained. Particularly good results are obtained by taking care to ensure that a molar ratio of hydrogen : nitrogen monoxide of from 3.5 to 5:1 is maintained in the reaction zone.

Advantageously, the acid used is a strong mineral acid, such as hydrochloric acid, nitric acid, sulfuric acid or phosphoric acid. It is also possible to use acid salts thereof, such as ammonium bisulfate. Particular preference is given to sulfuric acid, ammonium bisulfate or nitric acid. In general, the aqueous acid is initially from 4- to 6-normal and in the course of the reaction is never allowed to drop below 0.2 normal.

The reaction is advantageously carried out at from 30 to 80°C. Good utility is ensured at from 40 to 60°C. In general, the reaction is carried out under atmospheric pressure or under superatmospheric pressure, for example at up to 30 bar. Good utility is ensured with the method of working according to the invention when the reaction is carried out under superatmospheric pressure, for example at from 1.5 to 20 bar.

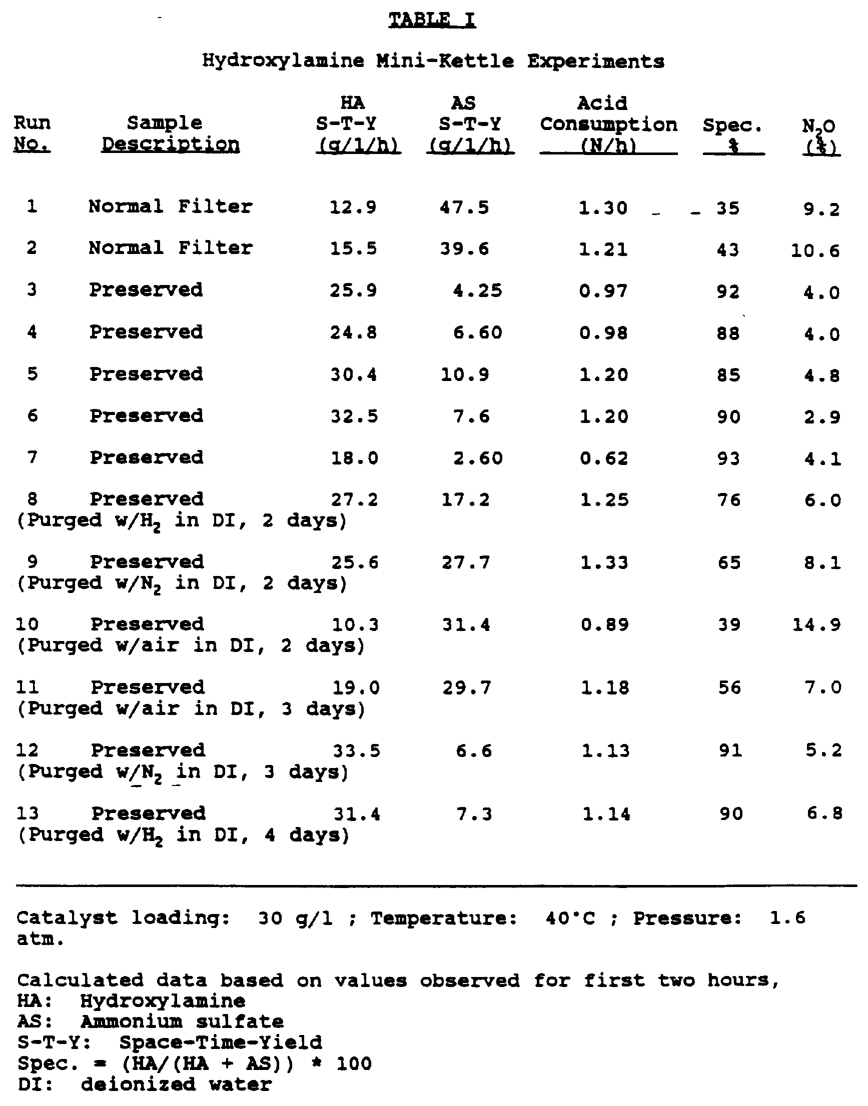

As can be seen from Table I, allowing platinum catalysts supported on a carbon carrier to be exposed to air severely reduces the selectivity of the catalyst towards hydroxylamine.

Likewise, when the method of storing the catalyst involves exposure to air, i.e., storing in deionized and deoxygenated water but purged with air, the selectivity of the catalyst is adversely affected. Conversely, platinum catalysts supported on a carbon carrier preserved in a substantially oxygen-free environment such as deionized and deoxygenated water, nitrogen, or hydrogen produce a surprising and unexpected selectivity of the catalyst towards hydroxylamine.

Previously, rapid addition of regenerated catalyst to reaction trains caused unacceptable selectivities. Following the instant invention of preserving the catalyst in a substantially oxygen-free environment, entire reactor cascades may be emptied and replaced with such preserved catalysts to achieve unexpectedly high production rates.

The embodiments of the invention in which an exclusive privilege or property is claimed are defined as follows:

## Claims

1. A method of inhibiting the diminution of the selectivity of a platinum catalyst supported on a carbon carrier in its use for preparing hydroxylamine, which comprises maintaining said catalyst in a substantially oxygen-free environment during preservation, manufacture, storage and use.

2. A method as set forth in claim 1 wherein said environment comprises deionized and deoxygenated water.

3. A method as set forth in claim 1 wherein said environment comprises nitrogen.

4. A method as set forth in claim 1 wherein said environment comprises hydrogen.

5. A method as set forth in claim 2 further comprising the steps of bubbling nitrogen through said water.

6. A method of charging a hydroxylamine production cascade comprising:
depositing a platinum catalyst on a carbon support in the presence of substantially oxygen free environment,
storing said prepared catalyst in a blanket of deionized and deoxygenated water contained in a sealed glass lined vessel and purging said vessel with nitrogen, and
adding said catalyst to said cascade and avoiding contacting said catalyst with oxygen durina said addition.

7. A method as set forth in claim 6 wherein the entire cascade is charged with said catalyst.

## Patentansprüche

1. Verfahren zur Hemmung der Abnahme der Selektivität eines auf einen Kohlenstoffträger aufgebrachten Platinkatalysators bei seiner Verwendung zur Herstellung von Hydroxylamin, dadurch gekennzeichnet, daß man diesen Katalysator während der Aufbewahrung, Herstellung, Lagerung und Verwendung in einer im wesentlichen sauerstoff-freien Umgebung hält.

2. Verfahren nach Anspruch 1, dadurch gekennzeichnet, daß diese Umgebung aus vollentsalztem und von Sauerstoff befreitem Wasser besteht.

3. Verfahren nach Anspruch 1, dadurch gekennzeichnet, daß diese Umgebung aus Stickstoff besteht.

4. Verfahren nach Anspruch 1, dadurch gekennzeichnet, daß diese Umgebung aus Wasserstoff besteht.

5. Verfahren nach Anspruch 2, ferner dadurch gekennzeichnet, daß man Stickstoff durch dieses Wasser perlt.

6. Verfahren zur Beschickung einer Hydroxylamin-Herstellungskaskade, umfassend:
Abscheidung eines Platinkatalysators auf einem Kohlenstoffträger in Gegenwart einer im wesentlichen sauerstoff-freien Umgebung,
Lagerung dieses hergestellten Katalysators bedeckt mit vollentsalztem und von Sauerstoff befreitem Wasser in einem zugeschmolzenen, mit Glas ausgekleideten Gefäß und Spülung dieses Gefässes mit Stickstoff und
Zugabe dieses Katalysators zu dieser Kaskade unter Vermeidung einer Berührung dieses Katalysators mit Sauerstoff während dieser Zugabe.

7. Verfahren nach Anspruch 6, dadurch gekennzeichnet, daß die ganze Kaskade mit diesem Katalysator beschickt wird.

## Revendications

1. Procédé pour empêcher la baisse de sélectivité d'un catalyseur au platine fixé sur un support de charbon dans son utilisation pour la préparation d'hydroxylamine, consistant à maintenir ledit catalyseur dans un milieu pratiquement exempt d'oxygène pendant son traitement de conservation, sa fabrication, son stockage et son utilisation.

2. Procédé selon la revendication 1, dans lequel ledit milieu comprend de l'eau désionisée et désoxygénée.

3. Procédé selon la revendication 1, dans lequel ledit milieu comprend de l'azote.

4. Procédé selon la revendication 1, dans lequel ledit milieu comprend de l'hydrogène.

5. Procédé selon la revendication 2, comprenant en outre l'opération consistant à faire barboter de l'azote dans ladite eau.

6. Procédé de chargement d'une cascade de production d'hydroxylamine, comprenant les opérations consistant
à déposer un catalyseur au platine sur un support de charbon dans un milieu pratiquement exempt d'oxygène,
à stocker le catalyseur ainsi préparé dans un milieu protecteur d'eau désionlsée et désoxygénée, contenu dans un récipient revêtu de verre et scellé, et à purger ce récipient avec de l'azote, puis
à charger ledit catalyseur dans ladite cascade en évitant tout contact dudit catalyseur avec de l'oxygène au cours de ce chargement.

7. Procédé selon la revendication 6, dans lequel la cascade entière est chargée dudit catalyseur.
